# EUROPEAN PATENT SPECIFICATION

(11) **EP 3 314 154 B1**
(45) Date of publication and mention of the grant of the patent: **31.03.2021**
(21) Application number: 15732224.9
(22) Date of filing: 25.06.2015
(51) Int. Cl.: F16L 27/08, F16L 39/06

(54) **A TOROIDAL FLUID SWIVEL FOR TRANSFER OF FLUID ACROSS A ROTARY INTERFACE**
TOROIDALER FLUIDDREHKOPF ZUR ÜBERTRAGUNG VON FLUID ÜBER EINE DREHSCHNITTSTELLE
TÊTE D'INJECTION DE FLUIDE TOROÏDALE POUR LE TRANSFERT DE FLUIDE SUR UNE INTERFACE ROTATIVE

(43) Date of publication of application: 02.05.2018
(73) Proprietor: Single Buoy Moorings, Inc., 1723 Marly (CH)
(72) Inventor: MENARDO, Philippe Albert Christian, 98000 Monaco (FR)
(74) Representative: Nederlandsch Octrooibureau
(86) International application number: PCT/EP2015/064384
(87) International publication number: WO 2016/206745

(56) References cited:
- WO-A2-2012/158907
- CH-A- 483 584
- DE-A1- 1 907 081
- DE-C1- 3 625 144
- FR-A1- 2 413 603
- US-A- 3 122 166
- US-A1- 2002 045 383

## Description

### Field of the invention

The present invention relates to a toroidal fluid swivel for transfer of fluid across a rotary interface. Also, the invention relates to a vessel equipped with a turret mooring system that comprises such a swivel.

### Background

Toroidal fluid swivels are known in the art for transfer of high-pressure fluids across a rotary interface between an incoming fluid line and an outgoing product piping. Applications for such a swivel include for example offshore oil and gas explorations where high-pressure flows of oil and/or gas are transferred from a (deep-sea) offshore well to a floating vessel such as a Floating Production Storage and Offloading (FPSO) vessel. Typically such a floating vessel is equipped with a turret mooring system that can couple a mooring buoy or a "mooring structure" and that holds one or more riser lines from the well, to product piping ducts on the vessel. Since the turret mooring system should allow some rotation between the vessel and the buoy, the swivel is likewise adapted to provide rotation between the incoming fluid line and the product piping.

In particular for deep-sea applications there is a need for swivels that can withstand design pressures well over 500 atm (50,6 MPa) for incoming fluid while at the same time, a high flow of the fluid should be transferred.

Typically, a prior art swivel comprises a fixed (or static) annular element that is coupled to an incoming fluid line on the turret, and a rotating annular element that is coupled to the outgoing product piping on the vessel. The fixed and rotating annular elements each have a shell shape that form a closed toroidal volume between them in which a radial interface (a basically cylindrical surface area) is present between the rotating element as outer shell and the fixed element as inner shell. The radial interface allows the rotating element to rotate with respect to the fixed element, but in the same time is detrimental to swivel shell design by adding further surfaces exposed to the fluid pressure, calling thus for thicker shell wall.

In the swivel according to the prior art the outer shell of the swivel (i.e., the rotating annular element) will have the property of expanding under the pressure in the flow path between the inner and outer shell parts. Counteracting this expansion and associated stress imposes heavy wall thickness, and complex face seal design. This strategy is not indefinitely sustainable when the swivel diameter increases, since the radial force on the radial interface increases with increasing diameter. Especially for high pressure applications this will lead to unmanageable wall thicknesses and excessive weight of parts of the swivel. These issues have an adverse effect on the design and size of the swivel construction, but also on maintenance and repair, and of course have an important impact on the cost and on manufacturing limitations.

A further issue relates to the operation mode of prior art swivels which involves avoiding rubbing contact between the fixed and rotating parts. The load path across the various swivel parts is often a long loop passing by a deported roller bearing and which is sealed by seals that can only operate with a very small extrusion gap having very little variation. Again, a proper functioning of this known swivel can be obtained only via massive swivel parts Document WO2012/158907 shows a swivel according to the state of the art.

It is an object of the present invention to overcome these disadvantages from the prior art.

### Summary of the invention

The object of the invention is achieved by a toroidal fluid swivel for transfer of fluid across a rotary interface around a swivel rotation axis between an incoming fluid line and an outgoing product piping,
the swivel comprising a fixed annular element and a rotating annular element, each arranged around a common rotation axis and having a substantially equal diameter; one selected element from the fixed annular element and the rotating annular element comprising an annular disk being provided with a toroidal cavity in a first of its circular end surfaces, and the other selected element from the fixed annular element and the rotating annular element being arranged with a flat circular end surface that is adjacent to and in close proximity above said first circular end surface of said annular disk so as to close the toroidal cavity and form a toroidal chamber within the annular disk,
the rotary interface being formed by the flat circular end surface of the other selected element and the adjacent first circular surface of the one selected element, the rotary interface being perpendicular to the common rotation axis.

According to the invention, the rotary interface between the fixed annular element and the rotating annular element is arranged perpendicular to the rotation axis, of the swivel, in contrast to the radial interface of the toroidal chamber of the prior art shell type swivel. Moreover, the toroidal chamber consists of a toroidal cavity formed in only one the fixed annular element covered by a flat contact surface of the rotating annular element or vice versa: a toroidal cavity formed only in the rotating annular element covered by a flat contact surface of the fixed element. This provides a relatively simple rotary interface perpendicular to the rotation axis.

The invention has the effect that forces in the swivel created by the high pressure fluid are substantially in axial direction. In a specific embodiment the radial forces applied to the inner and outer diameters of the toroidal chamber substantially counterbalance each other, being oriented in opposite radial directions, and exerted on the same swivel body part. Therefore, the hoop stresses and deformations in any of the swivel parts are greatly reduced, as a result of the respective surface difference between the toroidal inner and outer diameter subject to the pressure. Furthermore, this respective surface difference may be reduced by the multiple inlets and outlets serving the toroidal chamber, allowing to have a toroidal cavity to be only a corresponding fraction of the effective swivel overall throughput. This leads to a requirement for enforcement predominantly in axial direction. Additionally, since the rotary interfaces between the toroidal cavity and the sealing arrangement are a ring shaped area perpendicular or substantially perpendicular (for example a tapered or diagonal interface) to the rotation axis and not a cylindrical surface area, stresses (force per unit area) on the fixed annular element and the rotating annular element do not significantly increase for larger diameters of the swivel. This allows relative freedom of design (as compared to the prior art) with respect to the diameter of the swivel.

According to an aspect, the invention relates to a swivel as described above, wherein the one selected element is the fixed annular element and the other selected element is the rotating annular element; the toroidal cavity being provided in the fixed annular element and the flat circular end surface being provided in the rotating annular element.

According to an aspect, the invention relates to a swivel as described above, wherein the one selected element is the rotating annular element and the other selected element is the fixed annular element; the toroidal cavity being provided in the rotating annular element and the flat circular end surface being provided in the fixed annular element.

According to an aspect, the invention relates to a swivel as described above, wherein the annular disk is provided with at least one inlet aperture that couples the incoming fluid line to the toroidal cavity, the rotating annular element being provided with at least one passing through outlet aperture that provides a fluid communication between the toroidal chamber and the outgoing product piping.

According to an aspect, the invention relates to a swivel as described above, wherein the fixed annular element comprises an inner wall and an outer wall; the inner wall at one end connected to the annular disk, and the outer wall at one end connected to the fixed annular disk so as to form a "U-shaped" fixed annular element, and the rotary interface between the rotating annular element and the fixed annular element is arranged in between the inner and outer walls of the fixed annular element.

According to an aspect, the invention relates to a swivel as described above, wherein the rotary annular element is rotatingly clamped to the fixed annular element by retaining rings; the retaining rings being attached to the fixed annular element by bolts.

According to an aspect, the invention relates to a swivel as described above, wherein the fixed annular element comprises an annular disk which is provided with an inner wall at its inner edge and a circular wall parallel to the annular disk; the inner wall at one end is connected to the annular disk and at the other end is connected to the circular wall so as to form a "C-shaped" fixed annular element, and the rotating annular element is arranged in between the annular disk and the circular wall.

According to an aspect, the invention relates to a swivel as described above, wherein the at least one inlet aperture extends from a second circular end surface to the first circular end surface perpendicularly through the annular disk into the toroidal cavity, parallel to the common rotation axis.

According to an aspect, the invention relates to a swivel as described above, wherein the at least one outlet aperture extend perpendicular through the rotating annular element, parallel to the common rotation axis.

According to an aspect, the invention relates to a swivel as described above, wherein the at least one outlet aperture is provided internal of the rotation annular element with a right angle, has at the side of the toroidal chamber an inlet portion parallel to the common rotation axis and at the side of the outgoing product piping an outlet portion transverse to common rotation axis directed radially outward with respect to the common rotation axis.

According to an aspect, the invention relates to a swivel as described above, wherein the swivel further comprises retaining elements for retaining the rotating annular element between the inner and outer walls, the retaining elements being fixed to the inner and outer walls and holding the rotating annular element in position over the toroidal cavity.

According to an aspect, the invention relates to a swivel as described above, wherein the swivel comprises sealing means i.e., a seal or seals adjacent to the edges of the toroidal cavity between the annular disk and the rotating annular element.

According to an aspect, the invention relates to a swivel as described above, wherein the rotating annular element is provided with a bore hole extending between the inlet opening and a surface of the rotating annular element facing the circular wall of the fixed annular element.

According to an aspect, the invention relates to a swivel as described above, wherein the at least one inlet aperture comprises a plurality of externally interconnected inlet apertures distributed over the circle of the toroidal cavity, and the at least one outlet aperture comprises a plurality of externally interconnected outlet apertures distributed over the circle of the toroidal chamber.

According to an aspect, the invention relates to a swivel as described above, wherein in a top region of the toroidal cavity crossbars are fixedly arranged in radial direction over the cavity.

According to an aspect, the invention relates to a swivel as described above, wherein the cross-bars are distributed on the toroidal cavity at constant intermediate angle.

According to an aspect, the invention relates to a swivel as described above, wherein the at least one inlet aperture and/or the at least one outlet aperture has an elongated shape along the toroidal cavity.

According to an aspect, the invention relates to a swivel as described above, wherein the toroidal cavity extends over 360° around the common rotation axis.

According to an aspect, the invention relates to a swivel as described above, wherein the fixed annular element and/or the rotating annular element comprises a plurality of annular segments, the annular segments being interconnected at their ends to form the circular shape of the respective annular element.

According to an aspect, the invention relates to a swivel as described above, wherein the toroidal cavity is segmented as a series of cavity segments embodied as an homogeneous array of arc-shaped cavity segments, each cavity segment being provided with an inlet aperture, and the swivel comprises on the rotating annular element a corresponding number of outlet apertures that are distributed in accordance with the layout of said array, the cavity segments being designed with an overlapping passage between at least one of the inlet aperture(s) and at least one of the outlet aperture(s) in a manner that whatever angular orientation between the rotating and the fixed annular element a flow path through the swivel is present.

The invention also relates to a swivel stack comprising at least one swivel as described above.

Moreover, the invention relates to a vessel for offshore operations and comprising a turret mooring system, wherein the turret mooring system is equipped with a swivel as described above.

Advantageous embodiments are further defined by the dependent claims.

### Brief description of drawings

The invention will be explained in more detail below with reference to drawings in which illustrative embodiments thereof are shown. The drawings are intended exclusively for illustrative purposes and not as a restriction of the inventive concept. The scope of the invention is only limited by the definitions presented in the appended claims.
Figure 1 shows a perspective drawing of a rotary interface of a swivel in accordance with an embodiment of the invention;
Figure 2 shows a cross-section of the rotary interface of Figure 1 in accordance with an embodiment of the invention;
Figure 3 shows a cross-section of a swivel in accordance with an embodiment of the invention;
Figure 4 shows a cross-section of a swivel in accordance with a further embodiment of the invention;
Figure 5 shows a perspective cross-sectional view of a swivel in accordance with an embodiment of the invention;
Figures 6A and 6B show a perspective view and a side view of a number of concentric swivels in accordance with an embodiment of the invention;
Figure 7 shows a swivel stack comprising swivels in accordance with an embodiment of the invention.

### Detailed description of embodiments

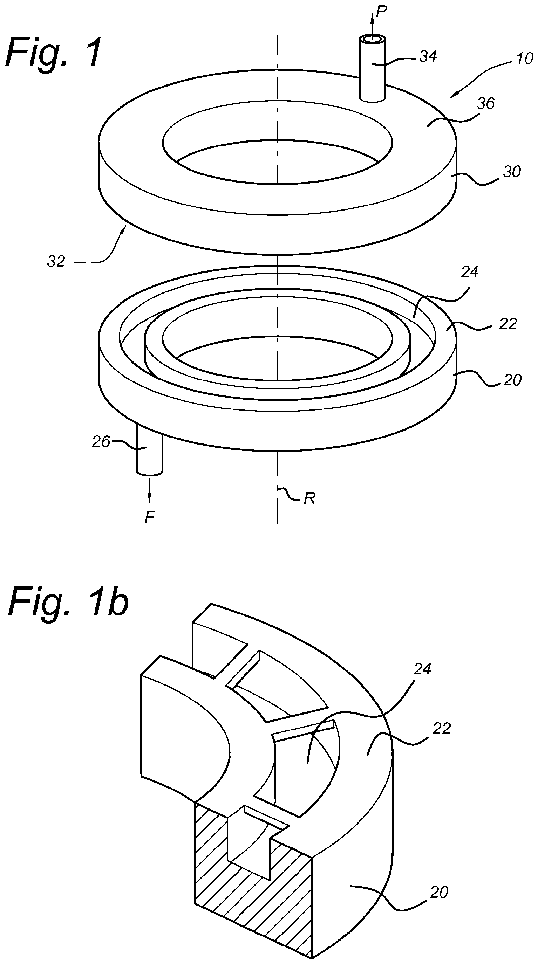

Figure 1 shows a perspective drawing of a rotary interface of a swivel in accordance with an embodiment of the invention.

On a FPSO vessel (not shown) a turret mooring system (not shown) is provided that can couple a mooring buoy that holds one or more riser lines from the well, to product piping ducts on the vessel.

During operation the FPSO should be allowed to weathervane which can be achieved the turret mooring system allowing some rotation between the vessel and the buoy. Correspondingly, the swivel is adapted to provide rotation between the incoming fluid line and the product piping.

The swivel 10 according to the invention comprises a rotary interface 20, 30 for transfer of fluid from the incoming fluid line to the outgoing product piping.

The rotary interface comprises two annular elements: a fixed annular element 20 that in use is coupled to the turret mooring system and a rotating annular element 30 that is coupled to the outgoing product piping that is attached to the vessel.

The two annular elements 20, 30 are arranged to have a common rotation axis R and to have a substantially same diameter.

The fixed annular element 20 consist of an annular disk which a first circular end surface 22, in which a toroidal cavity 24 or groove is arranged.

According to an embodiment, the toroidal cavity has been machined into the annular disk with inner and outer sidewalls of the cavity that is arranged to contain the high pressure fluid being perpendicular in respect of the direction of the rotation axis.

The fixed annular element additionally comprises at least one inlet aperture 26 for coupling the incoming fluid line (indicated by arrow F) to the groove.

The fixed annular element and the rotating annular element are held in frictional contact or close frictionless proximity by a bearing arrangement provided in each element so that one element can rotate freely in respect of the other element along the common rotation axis while axial displacement of one element in respect of the other element is restricted, or limited by the bearing arrangement. The toroidal chamber formed by the two elements contains at least one dynamic interface surface substantially perpendicular to the direction of the common rotation axis.

In a preferred embodiment, the at least one inlet aperture 26 is extending through the thickness of the annular disk from a second circular end surface opposite to the first circular end surface 22, into the toroidal cavity 24.

The rotating annular element 30 is arranged with a substantially flat circular end surface 32. The rotating annular element 30 is positioned with its flat circular end surface facing, and in close proximity to, the first circular end surface 22 of the fixed annular element, in such a manner that the opening surface of the toroidal cavity 24 is closed and a toroidal chamber is formed.

The rotary interface 20, 30 is thus defined between the first circular end surface 22 of the annular disk 20 and the facing flat circular end surface 32 of the rotating annular element and extends perpendicular to the common rotation axis R.

The person skilled in the art will appreciate that the toroidal cavity may alternatively be formed in the rotating annular element, while the fixed annular disk is provided with the facing flat circular surface for closing the toroidal cavity and forming the toroidal chamber between the fixed annular and the rotating annular elements.

The rotating annular element 30 additionally comprises at least one outlet aperture 34 for providing a connection from an inlet portion (not shown) at the flat circular surface 32 to an outlet portion coupled to the outgoing product piping (indicated by arrow P).

In an embodiment, the at least one outlet aperture 34 is extending through the thickness of the annulus of the rotating annular element 30 from the flat circular end surface opposite to an opposing circular end surface 36.

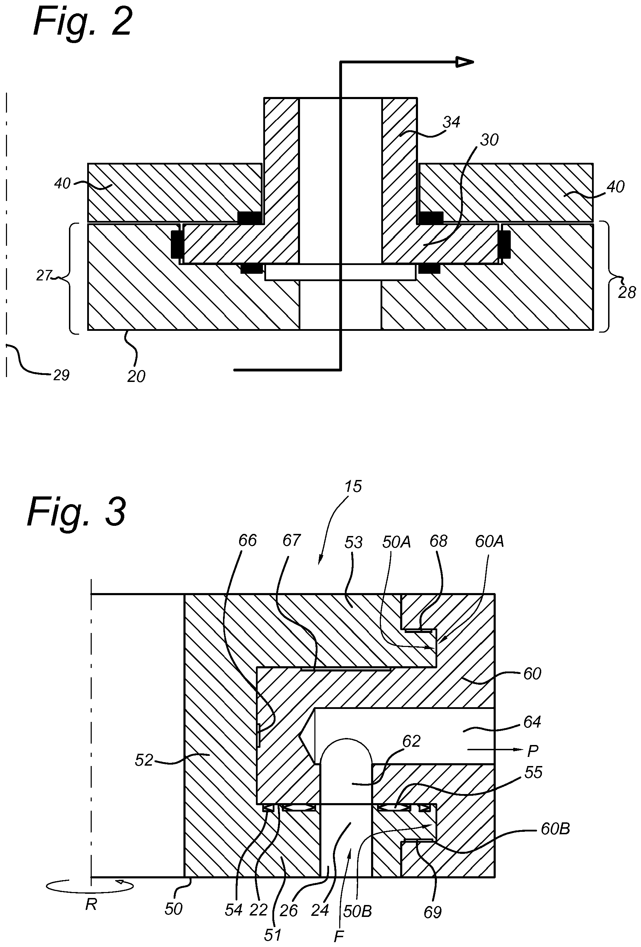

In an alternative embodiment, the outlet portion of the at least one outlet aperture 34 is located at the outer circumference of the rotating annular element as will be explained below in more detail with reference to Figure 3.

In case, a high pressure fluid is introduced from the incoming fluid line F, the toroidal chamber will be pressurized, which has the effect that a force is exerted on the rotary interface parallel to the rotation axis.

Of course, the high pressure may also induce some deformation in the plane of rotation but the skilled in the art will appreciate that such effect is highly reduced by the antagonist planar forces being exerted on the same part and greatly cancelling each other effects. Furthermore, those effects can be kept to the minimum by reducing the toroidal cavity section, while optimizing it's shape and wall thickness to avoid excessive stress and stress concentration.

Each swivel annular body can be made of a single annulus or at least two annular segments interconnected at their respective ends to forming thus a single whole body circumference. According to an embodiment, within the swivel the fixed annular disk and/or the rotating annular disk comprises a plurality of annular segments, the annular segments being interconnected at their ends to form the circular shape of the annular disk. It is noted that the circumferential continuity of the toroidal cavity is interrupted at the mating extremity of each annular segment which eliminates the hydrostatic separation force normally exerted on the whole toroidal cavity surface, leaving only the hydrostatic separation force corresponding to the swivel extrusion gap surface exposed to the fluid pressure, which in comparison is negligible.

The person skilled in the art will appreciate that at least one of the fixed and rotating annular elements can be embodied by a massive cylindrical part. For example, a swivel stack according to the invention may comprise one massive cylindrical inner part or inner core with multiple fluid lines (channels) combined with two or more outer (annular) parts.

In the above embodiments, the toroidal cavity is embodied as a circular and continuous channel in between the fixed annular element and the rotating annular element. According to an embodiment, the toroidal cavity is segmented as a series of cavity segments embodied as an homogeneous array of arc-shaped cavity segments, wherein each cavity segment is provided with an inlet aperture. On the rotating annular element a corresponding number of outlet apertures is provided that are distributed in accordance with the layout of the array. The cavity segments are designed in a manner that whatever the angular orientation between the rotating and the fixed annular element an overlapping passage is present between at least one of the inlet aperture(s) and at least one of the outlet aperture(s).

Figure 2 shows a cross-section of the rotary interface 20, 30 in accordance with an embodiment of the invention.

In Figure 2 the rotary interface is shown with inlet aperture 26 and outlet aperture 32 in alignment.

According to the shown embodiment, the annular disk part of the fixed annular element 20 is arranged with side walls 27, 28. An inner wall 27 is arranged at the inner circumference of the annular disk, an outer wall 28 is arranged at outer circumference of annular disk 20. Both inner and outer walls extend in the axial direction parallel to the rotation axis 29, towards the rotating annular element 30. In this manner, the fixed annular element has a "U-shape". The rotating annular element is positioned in between the inner and outer walls, with the rotary interface located at the "floor" inbetween the inner and outer walls.

On the distal ends of the walls 27, 28 away from the rotary interface, the swivel is provided with retaining rings 40 for holding the rotating annular element 30 positioned above and in close proximity to the first circular end surface of the annular disk 20. The retaining rings 40 are attached to the inner and outer walls 27, 28 by bolts (not shown here).

The rotary interface between the annular disk and the rotating annular element is further provided with seals 42 to prevent leakage of high pressure fluid from the toroidal chamber 24 along the rotary interface. Various seal type can be used as will be appreciated by the person skilled in the art, for example Zero gap sealing, face sealing, or membrane sealing.

The seals can be located at various positions between the surface of the annular disk 20 and the facing surface of rotating annular element 30 or between the rotating annular element 30 and the inner and/or outer walls 27, 28 or between the retaining ring(s) 40 and the surface of the rotating annular element that faces away from the rotary interface.

Moreover, the rotary interface is further provided with bearings that can also be positioned at various positions between the surface of the annular disk 20 and the facing surface of rotating annular element 30 or between the rotating annular element 30 and the inner and/or outer walls 27, 28 or between the retaining ring(s) 40 and the surface of the rotating annular element that faces away from the rotary interface. The bearings may comprise friction bearings and/or hydrostatic bearings, or other bearing types.

Figure 3 shows a cross-section of a swivel 15 in accordance with an embodiment of the invention.

The swivel comprises a fixed annular element 50 and a rotating annular element 60.

The fixed annular element 50 in this embodiment comprises a base annular disk 51, an inner wall 52 at the inner circumference of the base annular disk, and a second annular disk 53. The base annular disk 51 has a first circular end surface 22 perpendicular to the rotation axis R and is provided with a toroidal cavity 24 in the first circular end surface 22. At the inner circumference of the base annular disk, the inner wall 52 is provided that extends along the direction of the rotation axis and forms a cylindrical wall. The second annular disk 53 is arranged parallel to the base annular disk 51 and is connected to the cylindrical inner wall in a manner that a "C"-shaped toroid is formed with an opening at the outer circumference.

The rotating annular element 60 is arranged in the C-shaped opening between the base annular disk 51. and the second annular disk 53. The lower circular surface facing the first circular end surface of the first annular disk forms a rotary interface and closes the toroidal cavity so as to form a toroidal chamber.

The rotary interface next to the edges of the toroidal chamber 24 is provided with seal arrangements 54, 55.

Bearing arrangements are provided at least between the surface of the rotating annular element and the facing surface of the inner wall (vertical bearing 66), and between surface of the rotating annular element and the facing inner surface of the second annular disk 53 (horizontal bearing 67).

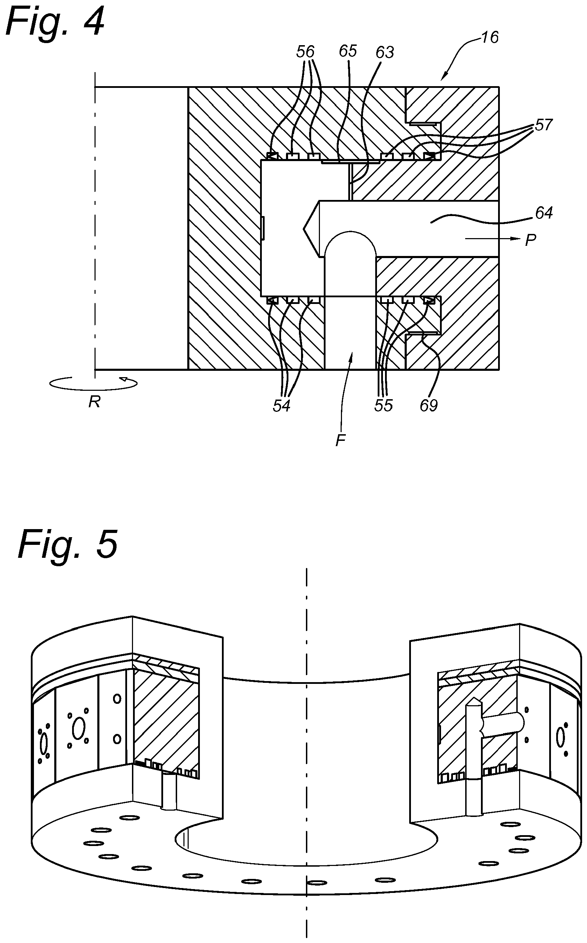

In particular, when high pressure fluid in the toroidal chamber is present, the rotary interface is subjected to torque along the axial direction. In that case in particular the horizontal bearing 67 needs to provide sufficient wear resistance to facing surfaces of the second annular disk and the rotating annular element as the contacting area of these surfaces is above the toroidal chamber 24. In Figure 4 an alternative embodiment will be described.

In Figure 3 an inlet aperture 26 and an outlet aperture 62, 64 are shown in alignment below and above the toroidal chamber 24.

The inlet aperture 26 extends through the thickness of the base annular disk 50 and is coupled with the incoming fluid line F.

The outlet aperture due to the arrangement of the rotating annular element 60 in the C-shaped toroid 51, 52, 53 has a right angled shape comprising an inlet portion 62 that is open towards the toroidal chamber and an outlet portion 64 that is perpendicular to the rotation axis direction and directed radially outward for coupling to the outgoing product piping P. The inlet portion and outlet portion of the outlet aperture could be formed by two intersecting drill holes.

In this embodiment, the outer circumferential portion of the rotating annular element 60 is provided with profiled end portions 60A, 60B that cooperate with profiled end portions 50A, 50B of the base and second annular disks.

Such profiles advantageously enhance the mechanical stability. It is noticed that the skilled in the art will appreciate that various shapes of the end profiles 60A, 60B; 50A, 50B are conceivable.

Figure 4 shows a cross-section of a swivel 16 in accordance with a further embodiment of the invention. The embodied swivel 16 is substantially identical to the swivel 15 described above with reference to Figure 3. In Figure 4 entities with the same reference number as shown in the preceding figure 3 refer to similar or same entities and will not be discussed here.

In the swivel 16 of this embodiment, a horizontal hydrostatic bearing 65 is provided at the horizontal portion of the rotary interface between the second annular disk 53 of the fixed annular element and the upper surface of the rotating annular element 60. In addition a borehole 63 is provided that extends from the outlet aperture 62, 64 to the surface of the rotating annular element at the location of the horizontal hydrostatic bearing 65. By providing high pressure fluid to the hydrostatic bearing during use of the swivel 16, a same pressure will be present at the rotary interface between the second annular disk 53 of the fixed annular element and the upper surface of the rotating annular element 60 as will be present at the side of the toroidal chamber. In this manner a counter force is present that at least reduces or minimizes the torque on the swivel 16. As a result, wear on the rotary interface will be significantly reduced.

According to an embodiment, adjacent to the horizontal hydrostatic bearing 65 seal arrangements 56, 57 are provided to avoid leakage from the hydrostatic bearing 65.

Figure 5 shows a perspective partially cut-away view of a swivel in accordance with an embodiment of the invention.

The swivel 17 of this embodiment, is similar to the embodiments 15, 16 shown in figures 3 and 4. The swivel comprises a C-shaped toroid 51, 52, 53 which is arranged as fixed annular element 50 that can be coupled to the incoming fluid line and a rotating annular element 60 that is positioned within the C-shaped toroid and can be coupled to the outgoing product piping. In between the C-shaped toroid 50 and the rotating annular element 60 the toroidal chamber 24 and the rotary interface are present that allow transfer of high pressure fluid over the rotary interface.

In this embodiment, between the second annular disk 53 and the upper surface 601 of the rotating annular element 60, a bearing arrangement 70, 71 (shown here as multiple layers) is provided. The bearing arrangement is a thrust bearing type and comprises either roller bearings or friction bearings.

At the rotary interface adjacent to the toroidal chamber 24, on each edge of the toroidal chamber an plurality of face seals 72 is arranged. Further, at the vertical interface between the C-shaped toroid 50 and the rotating annular element 60 a vertical bearing is arranged.

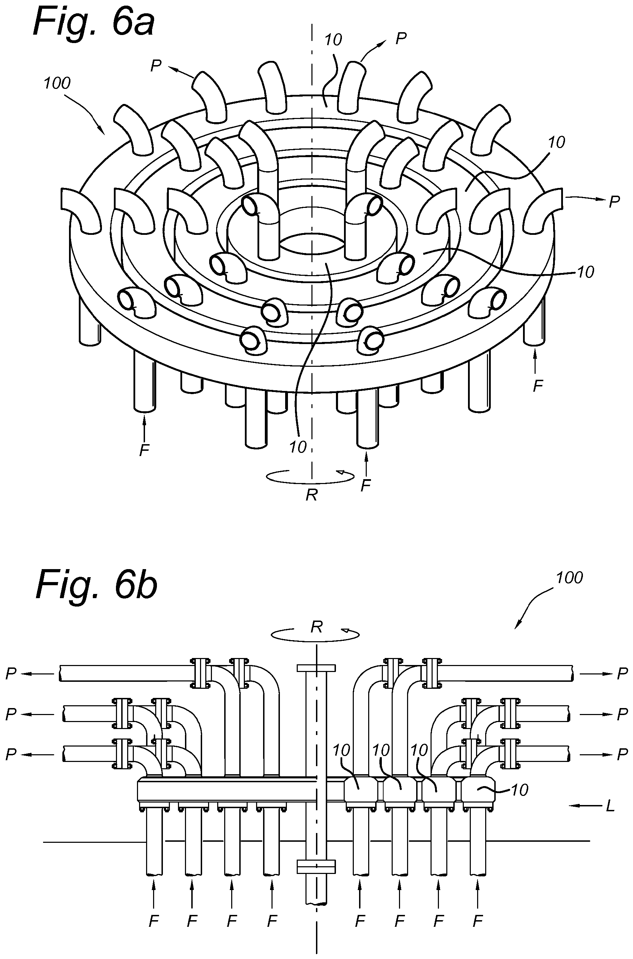

Figures 6A and 6B show a perspective view and a cross-sectional view respectively of a number of concentric swivels in accordance with an embodiment of the invention.

As the diameter of the swivel according to the invention has no significant effect on the vertical stresses on the swivel, the diameter can be chosen arbitrarily to any practical size without the need for excessive reinforcements for larger diameters. This allows to design an arrangement 100 of a series of concentric swivels 10 at substantially a same operational level L. Advantageously, this type of swivel arrangement 100 is more compact than a swivel stack arrangement of prior art swivels, saving space and weight in a turret mooring system.

The swivel arrangement according to the invention can create savings at least of the following order, pending on flow manifolding parameters, which are the smaller pipes size, which affects their required quantity and subsequently affects the swivel toroidal cavity and therefore its overall size.

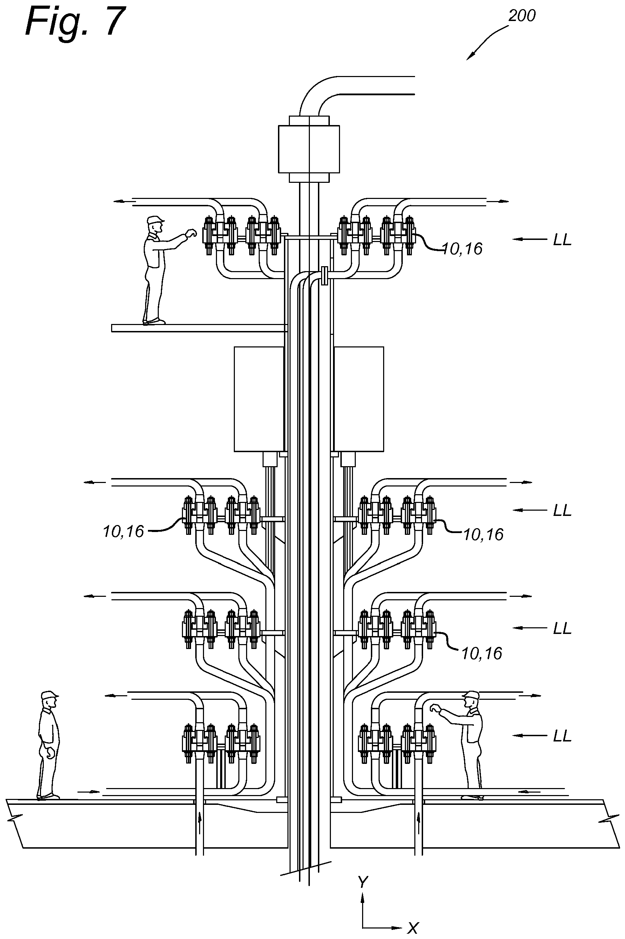

Figure 7 shows a schematic side view of a swivel stack comprising swivels in accordance with an embodiment of the invention.

According to an embodiment, a plurality of swivels 10;16 can be stacked in a relatively optimized manner. A number of swivels can be arranged concentrically in the horizontal direction X. This horizontal arrangement can be combined with a vertical stacking (Y) of swivels or multiple concentrically arranged swivels.

Swivels according to an embodiment of the invention are arranged at different operational levels LL above each other and also in concentric arrangement. Due to reduced requirements of enforcements and space, the weight and size of the swivel stack is relatively low and the swivel stack can be designed to be compact.

Stacking according to this method, results in a reduction of the overall swivel stack size, weight and cost where the fixed flow line entering the stack is divided into multiple smaller pipes connected to multiple smaller swivel inlets. Multiple swivel outlets connected to smaller pipes are then interconnected to at least one rotating flow line recreating thus the equivalent flow as the fixed flow line entering the stack.

Furthermore, a swivel stack 200 comprising one or more swivels as described above can be used in a swivel stack throughput repair or upgrade method where at least one new swivel in accordance with the invention is assembled concentrically around an existing (not necessarily prior art) swivel stack and connected via flow lines to the fixed and rotating stream lines of the FPSO, insuring thus the flow continuity.

In addition, a swivel according to any embodiment, can be equipped with a manifold header on either the fixed annular element or the rotating annular element in order to reduce the number of inlet or outlet pipes connected to the swivel. The respective header thus provides multiple paths either entering or departing the toroidal cavity.

In an embodiment, a swivel stack made with one or more swivels according to the invention has a header system for the incoming fluid flow which divides the incoming flow line in multiple smaller flow lines before entry of the swivel and has another header system that concentrates outgoing multiple flow lines into at least one larger outgoing flow line downstream of the swivel stack.

In relation to the swivel stack arrangements shown here, a swivel according to an embodiment of the invention may comprise a single input to an inner annular element and multiple outputs on the outer annular element of the rotary interface.

Furthermore, the swivel according to the invention may be designed to have the incoming fluid line pass through the center of the rotary interface, and connect with the swivel on the inner element of the swivel while the outgoing product piping exits through the outer periphery of the swivel. The incoming fluid line then substantially coincides with the rotation axis of the swivel.

Alternatively, the situation may be reversed in that the incoming fluid line(s) connect to the outer element of the swivel, and the outgoing product piping connects with the inner swivel element and passes through the center of the rotary interface. In that case, the outgoing product piping substantially coincides with the rotation axis of the swivel.

The invention has been described with reference to the preferred embodiment. Obvious modifications and alterations will occur to others upon reading and understanding the preceding detailed description. It is intended that the invention be construed as including all such modifications and alterations insofar as they come within the scope of the appended claims.

## Claims

1. A swivel (10) for transfer of high pressure oil and/or gas_across a rotary interface around a swivel rotation axis (R) between an incoming fluid line (F) and an outgoing product piping (P),
the swivel comprising a fixed annular element (20) and a rotating annular element (30), each arranged around a common rotation axis and having a substantially equal diameter;
one selected element from the fixed annular element and the rotating annular element comprising an annular disk being provided with a continuous and circular toroidal cavity (24) in a first of its circular end surfaces, and the other selected element from the fixed annular element and the rotating annular element being arranged with a flat circular end surface (32) that is adjacent to and in close proximity above said first circular end surface of said annular disk so as to close the toroidal cavity and form a toroidal chamber within the annular disk,
the rotary interface being formed by the flat circular end surface of the other selected element and the adjacent first circular surface of the one selected element, the rotary interface being perpendicular to the common rotation axis,
the fixed annular element comprises an inner wall (27) and an outer wall (28); the inner wall at one end arranged at an inner circumference of the annular disk (20), and the outer wall at one end arranged at an outer circumference of the fixed annular disk; **characterized in that**
the inner and outer walls each extending in an axial direction parallel to the rotation axis, towards the rotating annular element so as to form a "U-shaped" fixed annular element, and the rotary interface between the rotating annular element and the fixed annular element is arranged inbetween the inner and outer walls of the fixed annular element.

2. The swivel according to claim 1, wherein the one selected element is the fixed annular element (20) and the other selected element is the rotating annular element (30); the toroidal cavity (24) being provided in the fixed annular element and the flat circular end surface being provided in the rotating annular element.

3. The swivel according to claim 1, wherein the one selected element is the rotating annular element (30) and the other selected element is the fixed annular element (20); the toroidal cavity (24) being provided in the rotating annular element and the flat circular end surface being provided in the fixed annular element.

4. The swivel a according to any one of claims 1 - 3, wherein the annular disk is provided with at least one inlet aperture (26) that couples the incoming fluid line to the toroidal cavity,
the rotating annular element being provided with at least one passing through outlet aperture (34) that provides a fluid communication between the toroidal chamber and the outgoing product piping.

5. The swivel according to claim 1, wherein the rotary annular element is rotatingly clamped to the fixed annular element by retaining rings (40); the retaining rings being attached to the fixed annular element by bolts.

6. The swivel according to any one of claims 1 - 5, wherein the at least one inlet aperture extends from a second circular end surface to the first circular end surface perpendicularly through the annular disk into the toroidal cavity, parallel to the common rotation axis.

7. The swivel according to claim 1, wherein the at least one outlet aperture (34) extend perpendicular through the rotating annular element, parallel to the common rotation axis.

8. The swivel according to claim 1, wherein the swivel (10) further comprises retaining elements for retaining the rotating annular element between the inner and outer walls, the retaining elements being fixed to the inner and outer walls and holding the rotating annular element in position over the toroidal cavity.

9. The swivel according to any one of the preceding claims, wherein the swivel comprises sealing means adjacent to the edges of the toroidal cavity between the annular disk and the rotating annular element.

10. The swivel according to any one of the preceding claims 1 - 9, wherein the at least one inlet aperture comprises a plurality of externally interconnected inlet apertures distributed over the circle of the toroidal cavity, and
the at least one outlet aperture comprises a plurality of externally interconnected outlet apertures distributed over the circle of the toroidal chamber.

11. The swivel according to claim 1, wherein in a top region of the toroidal cavity crossbars are fixedly arranged in radial direction over the cavity, the cross-bars being distributed on the toroidal cavity at constant intermediate angle.

12. The swivel according to any one of the preceding claims 1 - 11, wherein the at least one inlet aperture and/or the at least one outlet aperture has an elongated shape along the toroidal cavity.

13. The swivel according to any one of the preceding claims, wherein the fixed annular element and/or the rotating annular element comprises a plurality of annular segments, the annular segments being interconnected at their ends to form the circular shape of the respective annular element.

14. Swivel stack (100; 200) comprising at least one swivel (10) according to any one of the preceding claims 1 - 13.

15. Vessel for offshore operations and comprising a turret mooring system, wherein the turret mooring system is equipped with a swivel according to any one of the preceding claims 1 - 13.

## Patentansprüche

1. Drehgelenk (10) zur Übertragung von Hochdrucköl und/oder -gas über eine Drehberührungsfläche um eine Drehgelenkdrehachse (R) zwischen einer einströmenden Flüssigkeitsleitung (F) und einer abgehenden Produktleitung (P);
wobei das Drehgelenk ein festes ringförmiges Element (20) und ein sich drehendes ringförmiges Element (30) umfasst, die jeweils um eine gemeinsame Drehachse angeordnet sind und einen im wesentlichen gleichen Durchmesser haben;
ein ausgewähltes Element aus dem festen ringförmigen Element und dem sich drehenden ringförmige Element eine ringförmige Scheibe umfasst, die in einer ersten ihrer kreisförmigen Stirnflächen mit einem durchgehenden und kreisförmigen Toroidhohlraum (24) versehen ist, und das andere ausgewählte Element aus dem festen ringförmigen Element und dem sich drehenden ringförmigen Element mit einer flachen kreisförmigen Stirnfläche (32) ausgestattet ist, die neben und in unmittelbarer Nähe über der ersten kreisförmigen Stirnfläche der ringförmigen Scheibe liegt, um den Toroidhohlraum zu schließen und eine Toroidkammer innerhalb der Ringscheibe auszubilden;
wobei die Drehberührungsfläche durch die flache kreisförmige Stirnfläche des anderen ausgewählten Elementes und die benachbarte erste Kreisfläche des einen ausgewählten Elementes ausgebildet ist und die Drehberührungsfläche senkrecht zur gemeinsamen Drehachse ist;
das feste ringförmige Element eine Innenwand (27) und eine Außenwand (28) umfasst und die Innenwand an einem Ende an einem Innenumfang der Ringscheibe (20) angeordnet ist und die Außenwand an einem Ende an einem Außenumfang der festen Ringscheibe angeordnet ist;
**dadurch gekennzeichnet, dass**
sich die Innen- und Außenwand jeweils in einer axialen Richtung parallel zu der Drehachse in Richtung des sich drehenden ringförmigen Elementes erstrecken, um ein "U-förmiges" festes ringförmiges Element auszubilden, und die Drehberührungsfläche zwischen dem sich drehenden ringförmigen Element und dem festen ringförmigen Element zwischen der Innen- und Außenwand des festen Ringelements angeordnet ist.

2. Drehgelenk nach Anspruch 1, bei dem das eine ausgewählte Element das feste ringförmige Element (20) und das andere ausgewählte Element das sich drehende ringförmige Element (30) ist, der Toroidhohlraum (24) in dem festen Ringelement vorgesehen ist, und die flache kreisförmige Stirnfläche in dem sich drehenden Ringelement vorgesehen ist.

3. Drehgelenk nach Anspruch 1, bei dem das eine ausgewählte Element das sich drehende ringförmige Element (30) ist und das andere ausgewählte Element das feste ringförmige Element (20) ist; der Toroidhohlraum (24) in dem sich drehenden Ringelement vorgesehen, und die flache kreisförmige Stirnfläche ist in dem festen Ringelement vorgesehen ist.

4. Drehgelenk nach einem der Ansprüche 1 bis 3, bei dem die ringförmige Scheibe mit wenigstens einer Einlassöffnung (26) versehen ist, die die ankommende Fluidleitung mit dem Toroidhohlraum koppelt, und
das sich drehende Element mit wenigstens einer Durchgangsöffnung (34) versehen ist, die eine Fluidverbindung zwischen der Toroidkammer und der auslaufenden Produktleitung herstellt.

5. Drehgelenk nach Anspruch 1, bei dem das sich drehende ringförmige Element durch Sicherungsringe (40) drehend an dem festen ringförmigen Element festgeklemmt ist, wobei die Sicherungsringe mit Schrauben an dem festen Ringelement befestigt sind.

6. Drehgelenk nach einem der Ansprüche 1 bis 5, bei dem sich die wenigstens eine Einlassöffnung von einer zweiten kreisförmigen Stirnfläche zur ersten kreisförmigen Stirnfläche senkrecht durch die Ringscheibe in den Toroidhohlraum parallel zu der gemeinsamen Drehachse erstreckt.

7. Drehgelenk nach Anspruch 1, bei dem sich die wenigstens eine Auslassöffnung (34) senkrecht durch das sich drehende Ringelement parallel zu der gemeinsamen Drehachse erstreckt.

8. Drehgelenk nach Anspruch 1, wobei das Drehgelenk (10) weiterhin Halteelemente zum Halten des sich drehenden Ringelements zwischen der Innen- und Außenwand umfasst, wobei die Halteelemente an der Innen- und Außenwand befestigt sind und das sich drehende Ringelement darin über den Toroidhohlraum in Position halten.

9. Drehgelenk nach einem der vorhergehenden Ansprüche, wobei das Drehgelenk Dichtungseinrichtungen umfasst, die an die Ränder des Toroidhohlraums zwischen der Ringscheibe und dem sich drehenden Ringelement angrenzen.

10. Drehgelenk nach einem der vorhergehenden Ansprüche 1 bis 9, bei dem die wenigstens eine Einlassöffnung mehrere extern miteinander verbundene Einlassöffnungen umfasst, die über den Kreis des Toroidhohlraums verteilt sind, und
die wenigstens eine Auslassöffnung mehrere extern miteinander verbundene Auslassöffnungen umfasst, die über den Kreis der Toroidkammer verteilt sind.

11. Drehgelenk nach Anspruch 1, bei dem in einem oberen Bereich des Toroidhohlraums Querstangen fest in radialer Richtung über dem Hohlraum angeordnet sind, wobei die Querstangen mit konstantem Zwischenwinkel auf dem Toroidhohlraum verteilt sind.

12. Drehgelenk nach einem der vorhergehenden Ansprüche 1 bis 11, bei dem die wenigstens eine Einlassöffnung und/oder die wenigstens eine Auslassöffnung eine längliche Form entlang des Toroidhohlraums aufweist.

13. Drehgelenk nach einem der vorhergehenden Ansprüche, bei dem das feste ringförmige Element und/oder sich drehende ringförmige Element mehrere ringförmige Segmente umfasst, wobei die ringförmigen Segmente an ihren Enden miteinander verbunden sind, um die Kreisform des jeweiligen ringförmigen Elements auszubilden.

14. Gelenkstapel (100; 200), umfassend wenigstens ein Gelenk (10) nach einem der vorhergehenden Ansprüche 1 bis 13.

15. Schiff für Offshore-Operationen und umfassend einen Verankerungszylinder, wobei der Verankerungszylinder mit einem Drehgelenk nach einem der vorhergehenden Ansprüche 1 bis 13 ausgestattet ist.

## Revendications

1. Tête d'injection (10) pour un transfert d'huile et/ou de gaz haute pression à travers une interface rotative autour d'un axe de rotation de tête d'injection (R) entre une conduite de fluide entrant (F) et une conduite de produit sortant (P),
la tête d'injection comprenant un élément annulaire fixe (20) et un élément annulaire rotatif (30), agencés chacun autour d'un axe de rotation commun et ayant un diamètre sensiblement égal ;
un certain élément sélectionné parmi l'élément annulaire fixe et l'élément annulaire rotatif comprenant un disque annulaire étant pourvu d'une cavité toroïdale continue et circulaire (24) dans une première de ses surfaces d'extrémité circulaires, et l'autre élément sélectionné parmi l'élément annulaire fixe et l'élément annulaire rotatif étant agencé avec une surface d'extrémité circulaire plate (32) qui est adjacente et à proximité étroite au-dessus de ladite première surface d'extrémité circulaire dudit disque annulaire de manière à fermer la cavité toroïdale et à former une chambre toroïdale à l'intérieur du disque annulaire,
l'interface rotative étant formée par la surface d'extrémité circulaire plate de l'autre élément sélectionné et la première surface circulaire adjacente du certain élément sélectionné, l'interface rotative étant perpendiculaire à l'axe de rotation commun,
l'élément annulaire fixe comprend une paroi intérieure (27) et une paroi extérieure (28) ; la paroi intérieure au niveau d'une extrémité agencée au niveau d'une circonférence intérieure du disque annulaire (20), et la paroi extérieure au niveau d'une extrémité agencée au niveau d'une circonférence extérieure du disque annulaire fixe ;
**caractérisé en ce que**
les parois intérieur et extérieur s'étendant chacune dans une direction axiale parallèle à l'axe de rotation, vers l'élément annulaire rotatif de manière à former un élément annulaire fixe « en forme de U », et l'interface rotative entre l'élément annulaire rotatif et l'élément annulaire fixe est agencé entre les parois intérieure et extérieure de l'élément annulaire fixe.

2. Tête d'injection selon la revendication 1, dans laquelle le certain élément sélectionné est l'élément annulaire fixe (20) et l'autre élément sélectionné est l'élément annulaire rotatif (30) ; la cavité toroïdale (24) étant prévue dans l'élément annulaire fixe et la surface d'extrémité circulaire plate étant prévue dans l'élément annulaire rotatif.

3. Tête d'injection selon la revendication 1, dans laquelle le certain élément sélectionné est l'élément annulaire rotatif (30) et l'autre élément sélectionné est l'élément annulaire fixe (20) ; la cavité toroïdale (24) étant prévue dans l'élément annulaire rotatif et la surface d'extrémité circulaire plate étant prévue dans l'élément annulaire fixe.

4. Tête d'injection selon l'une quelconque des revendications 1 à 3, dans laquelle le disque annulaire est pourvu d'au moins une ouverture d'entrée (26) qui couple la conduite de fluide entrant à la cavité toroïdale,
l'élément annulaire rotatif étant pourvu d'au moins une ouverture traversante de sortie (34) qui assure une communication fluidique entre la chambre toroïdale et la tuyauterie de produit sortant.

5. Tête d'injection selon la revendication 1, dans laquelle l'élément annulaire rotatif est serré en rotation sur l'élément annulaire fixe par des bagues de retenue (40) ; les bagues de retenue étant fixées à l'élément annulaire fixe par des boulons.

6. Tête d'injection selon l'une quelconque des revendications 1 à 5, dans laquelle la au moins une ouverture d'entrée s'étend d'une seconde surface d'extrémité circulaire à la première surface d'extrémité circulaire perpendiculairement à travers le disque annulaire jusque dans la cavité toroïdale, parallèlement à l'axe de rotation commun.

7. Tête d'injection selon la revendication 1, dans laquelle la au moins une ouverture de sortie (34) s'étend perpendiculairement à travers l'élément annulaire rotatif, parallèlement à l'axe de rotation commun.

8. Tête d'injection selon la revendication 1, dans laquelle la tête d'injection (10) comprend en outre des éléments de retenue pour retenir l'élément annulaire rotatif entre les parois intérieure et extérieure, les éléments de retenue étant fixés aux parois intérieure et extérieure et maintenant l'élément annulaire rotatif en position au-dessus de la cavité toroïdale.

9. Tête d'injection selon l'une quelconque des revendications précédentes, dans laquelle la tête d'injection comprend des moyens d'étanchéité adjacents aux bords de la cavité toroïdale entre le disque annulaire et l'élément annulaire rotatif.

10. Tête d'injection selon l'une quelconque des revendications précédentes 1 à 9, dans laquelle la au moins une ouverture d'entrée comprend une pluralité d'ouvertures d'entrée interconnectées extérieurement réparties sur le cercle de la cavité toroïdale, et
la au moins une ouverture de sortie comprend une pluralité d'ouvertures de sortie interconnectées extérieurement réparties sur le cercle de la chambre toroïdale.

11. Tête d'injection selon la revendication 1, dans laquelle dans une région supérieure de la cavité toroïdale, des traverses sont agencées de manière fixe dans une direction radiale au-dessus de la cavité, les traverses étant réparties sur la cavité toroïdale au niveau d'un angle intermédiaire constant.

12. Tête d'injection selon l'une quelconque des revendications précédentes 1 à 11, dans laquelle la au moins une ouverture d'entrée et/ou la au moins une ouverture de sortie a une forme allongée le long de la cavité toroïdale.

13. Tête d'injection selon l'une quelconque des revendications précédentes, dans laquelle l'élément annulaire fixe et/ou l'élément annulaire rotatif comprennent une pluralité de segments annulaires, les segments annulaires étant interconnectés à leurs extrémités pour former la forme circulaire de l'élément annulaire respectif.

14. Empilement de têtes d'injection (100 ; 200) comprenant au moins une tête d'injection (10) selon l'une quelconque des revendications précédentes 1 à 13.

15. Navire destiné à des opérations en mer et comprenant un système d'amarrage à tourelle, dans lequel le système d'amarrage à tourelle est équipé d'une tête d'injection selon l'une quelconque des revendications précédentes 1 à 13.
